# EUROPEAN PATENT APPLICATION

(11) **EP 4 365 626 A1**
(43) Date of publication of application: **08.05.2024**
(21) Application number: 23206748.8
(22) Date of filing: 30.10.2023
(51) Int. Cl.: G01S 7/497, G01S 17/95

(54) **SYSTEMS AND METHODS FOR OPTICAL DETECTOR DEGRADATION DETECTION**

(30) Priority: 07.11.2022 US 202217982197
(71) Applicant: ROSEMOUNT AEROSPACE INC., Burnsville, MN 55306-4898 (US)
(72) Inventor: LoPresto, Vincent R., Burnsville, MN, 55337 (US); ANDERSON, Kaare Josef, Burnsville, MN, 55337 (US); RAY, Mark D., Burnsville, 55337 (US)
(74) Representative: Dehns

(57) **Abstract**

In accordance with at least one aspect of this disclosure, a method of detecting a fault in a plurality of optical detectors (102, 202) includes receiving a first return beam from a first optical detector interrogation beam to generate a first optical signal indicative of an atmospheric condition from a first location on board the aircraft and receiving a second return beam from a second optical detector interrogation beam to generate a second optical signal indicative of the atmospheric condition from a second location on board the aircraft. The method includes, comparing each of the first and second optical signals with a baseline value to determine whether there is a fault in at least one optical detector of the plurality of optical detectors (102, 202).

## Description

### TECHNICAL FIELD

The present disclosure relates to sensors, and more particularly to sensor systems for use in aircraft for example.

### BACKGROUND

Certain vehicles (e.g., aircraft) include one or more optical sensors to sense any number of conditions. In certain instances, such as with the case of optical sensors, the sensor signals may experience fault events due to contamination on the window or by degradation of critical components within the device, for example. Often, vehicles will include multiple sensors of the same kind for redundancy, however degradation in one sensor can cause a disagreement between sensors, and therefore issue faulty or incorrect information to a controller. In addition to determining whether a fault has occurred, or whether any one sensor is degrading, it is also needed to determine which sensor of a redundant set is providing the faulty information.

There is still a need in the art for improved systems and methods for fault isolating in sensor splits, for example in degrading optical detectors. The present disclosure provides a solution for this need.

### SUMMARY

In accordance with at least one aspect of this disclosure, a method of detecting a fault in a plurality of optical detectors includes receiving a first return beam from a first optical detector interrogation beam to generate a first optical signal indicative of an atmospheric condition from a first location on board the aircraft and receiving a second return beam from a second optical detector interrogation beam to generate a second optical signal indicative of the atmospheric condition from a second location on board the aircraft. The method includes, comparing each of the first and second optical signals with a baseline value to determine whether there is a fault in at least one optical detector of the plurality of optical detectors.

In embodiments, the first optical signal can include an amplitude and/or a decay rate of the first optical return beam, and the second optical signal can include an amplitude and/or a decay rate of the second optical return beam.

In certain embodiments, the baseline value can include a predetermined range for each of the first and second optical signals. In such embodiments, the method can include determining a fault when the amplitude and/or decay rate of the first and/or second optical return beam is outside of a respective predetermined range. The respective predetermined ranges can be a range specific to a given portion of a flight envelope or a given cloud condition.

In embodiments, an optical fault can be determined when the first and second optical signals agree with respect to the decay rate of the first and second optical return beam, and the first and second optical signals do not agree with respect to the amplitude of the first and second optical return beams. In embodiments, an electrical fault can be determined when the first and second optical signals are agree with respect to the amplitude of the first and second optical return beam, and wherein the first and second optical signals do not agree with respect to the decay rate of the first and second optical return beams.

In certain embodiments, the baseline value can be generated from historical data for a given portion of a flight envelope or a given cloud condition. In certain such embodiments, the method can further include comparing the first and second optical signals to each other to generate a signal split parameter, and comparing the signal split parameter with signal split historical data for the given portion of a flight envelope or the given cloud condition. The method can include determining a fault when the signal split parameter exceeds a predetermined signal split threshold.

In certain embodiments, the baseline value can be generated from historical data for a given flight path. In certain such embodiments, the method can further include comparing the first and second optical signals to each other to generate a signal split parameter and tracking the signal split parameter throughout a flight having the given flight path, continually comparing the signal split parameter to the signal split historical data to determine whether the signal split parameter is increasing or decreasing, and determining a fault if the difference between the signal split parameter is increasing or decreasing beyond the predetermined signal split threshold.

In embodiments, the baseline value can be generated by comparing the first and second optical signals to each other to generate a signal split parameter, and the method can further include deriving which optical detector of the plurality of optical detectors is at fault. Deriving can include, if the signal split parameter exceeds the predetermined signal split threshold, comparing each of the first and second optical signals with a respective baseline value for each of the first and second optical signals, wherein the respective baseline values are known, expected values.

In certain embodiments, the baseline value can include a baseline signal derived from a mechanical detector. In such embodiments, the method can further include sensing a condition representative of the first location and/or second location with the mechanical detector and comparing each of the first and second optical signals with the baseline signal to determine whether there is a fault in at least one optical detector of the plurality of optical detectors.

In certain embodiments, the method can include interrogating the atmosphere from the first location and interrogating the atmosphere from the second location. In embodiments, the first location and the second location can be different and in certain embodiments, the first location and the second location can be on opposite sides of the aircraft from one another.

In accordance with at least one aspect of this disclosure, a system can include a first optical detector configured to interrogate the atmosphere from a first location onboard an aircraft and receive a first optical return beam to generate a first optical signal indicative of an atmospheric condition from the first location and a second optical detector configured to interrogate the atmosphere from a second location onboard the aircraft, different from the first location, and receive a second optical return beam to generate a second optical signal indicative of the atmospheric condition from the second location. A controller can be operatively connected to the first and second optical detectors. The controller can include a memory having instructions stored therein and/or a non-transitory computer readable medium, the controller configured to receive the first optical signal, receive the second optical signal, and compare each of the first and second optical signals with a baseline value to determine whether there is a fault in at least one optical detector of the plurality of optical detectors.

In embodiments, the baseline value can include a predetermined range, and the first optical signal can include an amplitude and/or a decay rate of the first optical return beam, and the second optical signal can include an amplitude and/or a decay rate of the second optical return beam. The controller can be configured to indicate a fault has occurred when the amplitude and/or decay rate of the first and/or second optical return beam is outside of a respective predetermined range for a given portion of a flight envelope or a given cloud condition.

In embodiments, the controller can be configured to determine an optical fault or an electrical fault based at least in part on whether the first and second optical signals are in agreement with respect to the amplitude and/or decay rate.

In certain embodiments, the baseline value can be generated from historical data for a given portion of a flight envelope, a given cloud condition, or a given flight path. In certain such embodiments, the controller can be further configured to compare the first and second optical signals to each other to generate a signal split parameter, and compare the signal split parameter with signal split historical data for the given portion of a flight envelope, the given cloud condition, or the given flight path. The controller can be configured to determine a fault when the signal split parameter exceeds a predetermined signal split threshold known for the given portion of a flight envelope, the given cloud condition, or the given flight path.

In embodiments, the controller can be further configured to derive which optical detector of the plurality of optical detectors is at fault. Deriving can include, if the signal split parameter exceeds the predetermined signal split threshold, comparing each of the first and second optical signals with a respective baseline value, wherein the baseline value is a known, expected value.

In certain embodiments, the system can also include at least one mechanical detector configured to sense a condition representative of the first and/or second location and to generate a baseline signal indicative of the condition at the first and/or second location. In certain such embodiments, the controller can be further configured to compare each of the first and second optical signals with the baseline signal to determine whether there is a fault in at least one optical detector of the plurality of optical detectors. In certain embodiments, the first and second optical detectors include optical ice detectors, and the mechanical detector can be a mechanical ice detector.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a system in accordance with this disclosure, showing an aircraft having one or more sensors operatively connected thereto; and
Fig. 2 is an enlarged schematic view of the sensor of Fig. 1.

### DETAILED DESCRIPTION

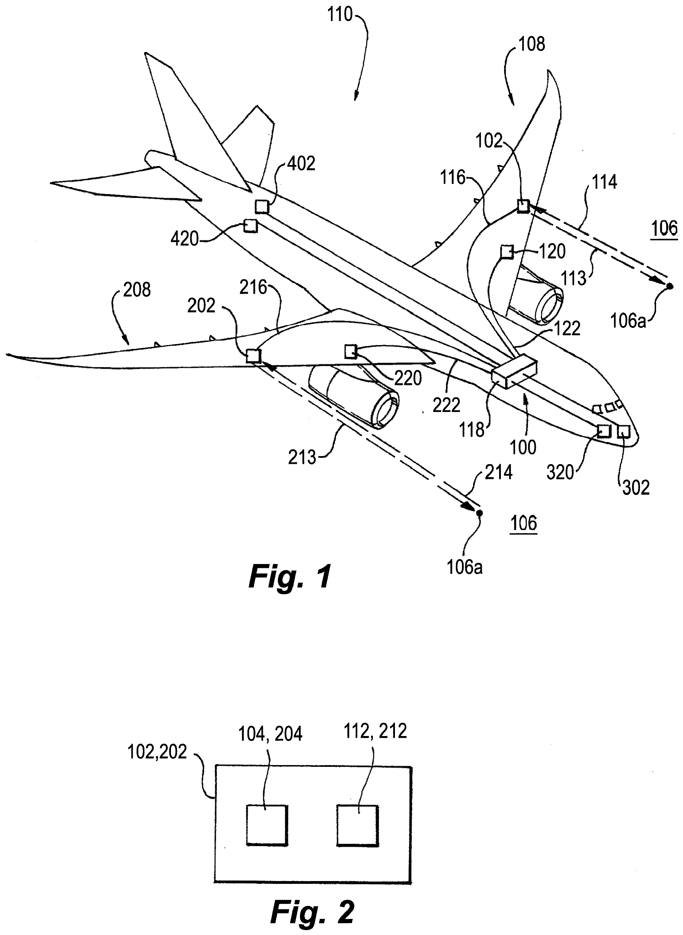

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2.

In accordance with at least one aspect of this disclosure, as shown in Figs. 1 and 2, a system 100 (e.g., for detecting one or more aircraft conditions) can include a first optical detector 102 (e.g., LIDAR) configured to interrogate (e.g., with a transmitter portion 104 of the first optical detector 102) the atmosphere 106 from a first location 108 of an aircraft 110 and receive (e.g., at a receiver portion 112 of the first optical detector 102) a first optical return beam 114 to generate a first optical signal 116 indicative of an atmospheric condition from the first location 108. The system 100 can include a second optical detector 202 configured to interrogate (e.g., with a transmitter portion 204 of the second optical detector 204) the atmosphere 106 from a second location 208 of the aircraft 110, different from the first location (e.g., on opposite sides of the aircraft 100), and receive (e.g., at a receiver portion 212 of the second optical detector 204) a second optical return beam 214 to generate a second optical signal 216 indicative of the atmospheric condition from the second location 208. In certain embodiments, the first and second optical detectors 102, 202 can include optical ice detectors configured to detect an ice condition of the aircraft, or a predicted ice condition, from the first and second locations 108, 208. While two optical detectors are shown and described, it is contemplated that any suitable number of detectors can be included, for example detectors 302, 402 which can be similarly configured as detectors 102, 202 described herein.

A controller 118 can be operatively connected to the first and second optical detectors 102, 202 configured to receive the first optical signal 116 and receive the second optical signal 216. The controller 118 can include a memory having instructions stored therein and/or a non-transitory computer readable medium, the instructions and/or medium configured to cause the controller 118 to perform a method. In embodiments, the method can include determining whether there is a fault in at least one optical detector of the plurality of optical detectors 102, 202.

In accordance with at least one aspect of this disclosure, a method (e.g., the method performed at least in part by the controller 118) can be a method of detecting a fault in a plurality of optical detectors (e.g., optical detectors 102, 202). In embodiments, the method can include issuing an interrogation beam 113 from the first optical detector 102 to interrogate the atmosphere 106 from the first location 108 and receiving the first optical return beam 114 to generate the first optical signal 116 indicative of an atmospheric condition (e.g., an icing condition or predicted icing condition) at the first location 108. The method can include issuing an interrogation beam 213 from the second optical detector 202 to interrogate the atmosphere 106 from the second location 208 and receiving the second optical return beam 216 to generate the second optical signal 216 indicative of the atmospheric condition at the second location 208. The method includes comparing each of the first and second optical signals 116, 216 with a baseline value to determine whether there is a fault in at least one optical detector 102, 202 of the plurality of optical detectors.

In embodiments, the first and second optical signals 116, 216 can include information regarding an amplitude and/or a decay rate (e.g., a decay rate of the return beam 114, 214 over the distance between an interrogation point 106a and the receiver of the respective optical detector 102, 202) of the respective optical return beams 114, 214. In embodiments, the first and second optical signals 116, 216 can include a ratio of amplitude to decay rate. There are multiple ways the controller 118 can be configured to determine if a fault has occurred in one or more of the optical detectors 102, 202, to determine which, if any, has faulted and, to determine the type of fault that has occurred. Each will be discussed in turn herein below.

In certain embodiments, the method can include comparing the amplitudes of the first and second optical signals 116, 216 and comparing the decay rates of the first and second optical signals 116, 216. The method can include determining an optical fault (e.g., degraded or faulty optics) when the first and second optical signals 116, 216 are in agreement with respect to the decay rate of the first and second optical return beams 114, 214, but the first and second optical signals 116, 216 are not in agreement with respect to the amplitude of the first and second optical return beams 114, 214. The method can include determining an electrical fault (e.g., degraded or faulty wiring or timing electronics) when the first and second optical signals 116, 216 are in agreement with respect to the amplitude of the first and second optical return beams 114, 214, but the first and second optical signals 116, 216 are not in agreement with respect to the decay rate of the first and second optical return beams 114, 214. Here, the baseline values can be the first and second optical signals 116, 216 compared to each other.

In certain embodiments, the baseline value can include a predetermined range for each of the first and second optical signals 116, 216. In such embodiments, the method can include determining a fault when the amplitude and/or decay rate of the first and/or second optical return beam 114, 214 is outside of a respective predetermined range (e.g., greater or less than 30% different from an expected value) . The respective predetermined ranges can be a range specific to a given portion of a flight envelope or a given cloud condition or specific to the values of the other parameters in the optical signal.

In certain embodiments, the baseline value can be generated from historical data for a given portion of a flight envelope or a given cloud condition and the method can include determining a fault when the amplitude and/or decay rate of the first and/or second optical return beams 114, 214 deviate from the known value for the given cloud condition, flight phase, and historical reading.

In certain embodiments, the method can further include comparing the first and second optical signals to each other to generate a signal split parameter (e.g., a difference between the first and second optical signals 116, 216). In certain conditions, it may be that the readings from the first and second optical detectors 102, 202 are known to differ, therefore, the mere fact that the two detectors 102, 202 are not in agreement may not be enough to determine a fault. Here, the method can further include comparing the signal split parameter with signal split historical data for the given portion of a flight envelope or the given cloud condition or over a prior time period. The method can include determining a fault when the signal split parameter exceeds a predetermined signal split threshold, for example when the difference between the first and second optical signals is too great or if a signal split is expected and is not observed.

The method can also include tracking the signal split parameter throughout a flight and continually comparing the signal split parameter to the signal split historical data to determine whether the signal split parameter is increasing or decreasing. Here the method can include determining a fault if the magnitude of the signal split parameter is increasing or decreasing beyond a boundary of the predetermined signal split threshold.

In one or more embodiments, to determine which optical detector is the cause of the fault, the method can include, if the signal split parameter is out of bounds with the predetermined signal split threshold, comparing each of the first and second optical signals 116, 216 with a respective baseline value, wherein the baseline value is a known, expected value (e.g., any one or more baseline value as described herein).

In certain embodiments, the system can also include at least one mechanical detector 120 (e.g., a vibrating probe), 220 configured to sense an aircraft condition (e.g., corresponding to the condition as detected by the first and second optical detectors 102, 202) at the first and/or second location 108, 208 and to generate a baseline signal 122, 222 indicative of the condition at the first and/or second location 108, 208. In embodiments, the mechanical detector 120 can be placed at any suitable location on the aircraft (e.g., different from either or both of the first and/or second locations 108, 208) and can be configured to sense a similar condition as to the first and second optical detectors 102, 202.

In certain such embodiments, the method (e.g., performed at least in part by the controller 118) can include comparing each of the first and second optical signals 116, 216 with the baseline signal 122, 222 to determine whether there is a fault in at least one optical detector 102, 202 of the plurality of optical detectors and/or to determine which optical detector is at fault. In certain embodiments, all the optical detectors 102, 202, 302, 402 and mechanical detectors 120, 220, 320, 420 can be ice detectors configured to sense an ice condition of the aircraft. However, one having ordinary skill in the art in view of this disclosure would readily appreciate that the systems and methods provided herein can be applied to other sensors or detectors for sensing other aircraft conditions.

Embodiments include a system and method to determine whether an optical sensor on a vehicle is affected by contamination on the window or by degradation of critical components within the device, when more than one of the same type of sensor is present on the vehicle. Implementation of embodiments can be accomplished by comparing the differences in response of two or more sensors over a sufficient timeline to avoid observing solely transient effects.

In certain embodiments, the sensors can include an aircraft having at least two optical ice detectors (OID) mounted on opposite sides of the aircraft. In most flight conditions, the two detectors will be sensing similar conditions and will generate similar detection signals. If one of the sensors has become contaminated, for example by deep scratches on the window, a noticeable change in the detection signal for that sensor will result in comparison to the sensor on the other side of the aircraft. A similar difference will be noted if a critical component within the sensor, such as the laser or photodetector, becomes degraded. In either case, a fault flag in the sensor control system will indicate the need for maintenance.

In certain embodiments, for example with respect to the OIDs, which sense a range-resolved backscatter signal from clouds, a similar decay rate from both sensors but widely different measured backscatter coefficients could indicate a loss of laser power or perhaps an obscuration of the window from dirt or from crazing. Furthermore, an intense signal at very close range for the sensor in question compared to the other sensor could suggest obscuration of the window rather than loss of laser power. However, such discrepancies would not indicate problems with the timing circuitry which generates the decay curves. Discrepancies in the decay rates but not the intensities of the backscatter can suggest faults or degradation within the timing electronics.

Embodiments of OIDs can include built-in tests to ensure proper function as specified by a set design standard or an acceptance test. Embodiments include cross-comparison testing to detect more subtle, long-term degradation. Gradual degradation, such as loss in laser power, window crazing, fogging or mold growth on the optics from moisture intrusion can all lead to failure of the built-in test. Embodiments provide for continuous comparison of two or more functioning sensors to provide warning of imminent sensor failure before the built-in test fails.

Embodiments can detect gradual loss of sensor function, and the method as provided herein can include a comparison that is performed continuously and subjected to statistical analysis. Singular events (such as flight at the edge of a cloud where only one sensor is exposed to that condition) do not necessarily indicate sensor malfunction. However, the continuous, consistent discrepancy between or among sensors can be required for the system and method to determine an actual fault in the system. In addition, in certain embodiments, the method can take into account variations in the function of a given sensor (i.e. variations in laser power and small drifts in the speed of timing electronics over temperature) to ensure that the discrepancy is a real, true sensor failure and not a transient within the statistical variation of a given sensor.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," "controller," or "system." A "circuit," "module," "controller," or "system" can include one or more portions of one or more separate physical hardware and/or software components that can together perform the disclosed function of the "circuit," "module," or "system", or a "circuit," "controller," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of "

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A method of detecting a fault in a plurality of optical detectors comprising:
receiving a first return beam from a first optical detector interrogation beam to generate a first optical signal indicative of an atmospheric condition from a first location on board the aircraft;
receiving a second return beam from a second optical detector interrogation beam to generate a second optical signal indicative of the atmospheric condition from a second location on board the aircraft; and
comparing each of the first and second optical signals with a baseline value to determine whether there is a fault in at least one optical detector of the plurality of optical detectors.

2. The method of claim 1, wherein the first optical signal includes an amplitude and/or a decay rate of the first optical return beam, and wherein the second optical signal includes an amplitude and/or a decay rate of the second optical return beam.

3. The method of claim 2, wherein the baseline value includes a predetermined range for each of the first and second optical signals, wherein a fault is determined when the amplitude and/or decay rate of the first and/or second optical return beam is outside of a respective predetermined range.

4. The method of claim 3, wherein the respective predetermined ranges include a range specific to a given portion of a flight envelope or a given cloud condition.

5. The method of claim 3, wherein an optical fault is determined when the first and second optical signals agree with respect to the decay rate of the first and second optical return beam, and when the first and second optical signals do not agree with respect to the amplitude of the first and second optical return beams.

6. The method of claim 3, wherein an electrical fault is determined when the first and second optical signals agree with respect to the amplitude of the first and second optical return beam, and when the first and second optical signals do not agree with respect to the decay rate of the first and second optical return beams.

7. The method of any preceding claim, wherein the baseline value is generated from historical data for a given portion of a flight envelope or a given cloud condition, and further comprising:
comparing the first and second optical signals to each other to generate a signal split parameter; and
comparing the signal split parameter with signal split historical data for the given portion of a flight envelope or the given cloud condition, wherein a fault is determined when the signal split parameter exceeds a predetermined signal split threshold.

8. The method of any preceding claim, wherein the baseline value is generated from historical data for a given flight path, and further comprising:
comparing the first and second optical signals to each other to generate a signal split parameter;
tracking the signal split parameter throughout a flight having the given flight path; and
continually comparing the signal split parameter to the signal split historical data to determine whether the signal split parameter is increasing or decreasing, and determining a fault if the difference between the signal split parameter is increasing or decreasing beyond the predetermined signal split threshold.

9. The method of any preceding claim, wherein the baseline value is generated from comparing the first and second optical signals to each other to generate a signal split parameter, and further comprising, deriving which optical detector of the plurality of optical detectors is at fault, wherein deriving includes,
if the signal split parameter exceeds the predetermined signal split threshold, comparing each of the first and second optical signals with a respective baseline value for each of the first and second optical signals, wherein the respective baseline values are known, expected values.

10. The method of any preceding claim, wherein the baseline value includes a baseline signal derived from a mechanical detector, and further comprising:
sensing a condition representative of the first location and/or second location with the mechanical detector; and
comparing each of the first and second optical signals with the baseline signal to determine whether there is a fault in at least one optical detector of the plurality of optical detectors.

11. The method of any preceding claim, further comprising, interrogating the atmosphere from the first location and interrogating the atmosphere from the second location, and preferably wherein the first location and the second location are different, and more preferably wherein the first location and the second location are on opposite sides of the aircraft from one another.

12. A system (100), comprising:
a first optical detector (102) configured to interrogate the atmosphere (106) from a first location (108) onboard an aircraft (110) and receive a first optical return beam (114) to generate a first optical signal (116) indicative of an atmospheric condition from the first location (108);
a second optical detector (202) configured to interrogate the atmosphere (106) from a second location (208) onboard the aircraft (110), different from the first location (108), and receive a second optical return beam (214) to generate a second optical signal (216) indicative of the atmospheric condition from the second location (208); and
a controller (118) operatively connected to the first and second optical detectors (102, 202) including a non-transitory computer readable medium having computer executable instructions configured to cause the controller to:
receive the first optical signal;
receive the second optical signal; and
compare each of the first and second optical signals with a baseline value to determine whether there is a fault in at least one optical detector of the plurality of optical detectors.

13. The system of claim 12, wherein the baseline value includes a predetermined range, wherein the first optical signal includes an amplitude and/or a decay rate of the first optical return beam, and wherein the second optical signal includes an amplitude and/or a decay rate of the second optical return beam, wherein the controller is configured to indicate a fault has occurred when the amplitude and/or decay rate of the first and/or second optical return beam is outside of a respective predetermined range for a given portion of a flight envelope or a given cloud condition, and preferably wherein the controller is configured to determine an optical fault or an electrical fault based at least in part on whether the first and second optical signals are in agreement with respect to the amplitude and/or decay rate, and preferably wherein the baseline value is generated from historical data for a given portion of a flight envelope, a given cloud condition, or given flight path, and wherein the controller is further configured to:
compare the first and second optical signals to each other to generate a signal split parameter; and
compare the signal split parameter with signal split historical data for the given portion of a flight envelope, the given cloud condition, or the given flight path, wherein a fault is determined when the signal split parameter exceeds a predetermined signal split threshold known for the given portion of a flight envelope, the given cloud condition, or the given flight path, and more preferably wherein the controller is further configured to derive which optical detector of the plurality of optical detectors is at fault, wherein deriving includes,
if the signal split parameter exceeds the predetermined signal split threshold, the controller is configured to compare each of the first and second optical signals with a respective baseline value, wherein the baseline value is a known, expected value.

14. The system of claim 12 or 13, further comprising at least one mechanical detector (120) configured to sense a condition representative of at the first and/or second location and to generate a baseline signal indicative of the condition at the first and/or second location, wherein the controller is further configured to compare each of the first and second optical signals with the baseline signal to determine whether there is a fault in at least one optical detector of the plurality of optical detectors.

15. The system of any of claims 12-14, wherein the first and second optical detectors (102, 202) include optical ice detectors.
